# FASCICULE DE BREVET EUROPEEN

(11) **EP 2 868 870 B1**
(45) Date de publication et mention de la délivrance du brevet: **30.01.2019**
(21) Numéro de dépôt: 14190500.0
(22) Date de dépôt: 27.10.2014
(51) Int. Cl.: F01D 25/12, F02C 7/24, F01D 9/06, F02C 7/32, B64D 33/08, F02C 7/18

(54) **Turbomachine accueillant un équipement dans son compartiment moteur ainsi qu'un dispositif de protection thermique de l'équipement**
Turbotriebwerk, das ein Gerät sowie eine Wärmeschutzvorrichtung dieses Geräts in seinem Motorraum enthält
Turbomachine housing a device in the engine compartment thereof and thermal protector for the device

(30) Priorité: 31.10.2013 FR 1360716
(43) Date de publication de la demande: 06.05.2015
(73) Titulaire: Airbus Operations, 31060 Toulouse (FR)
(72) Inventeur: Sommerer, Yannick, 31700 Cornebarrieu (FR); Jeanmougin, Stéphanie, 31200 Toulouse (FR)
(74) Mandataire: Santarelli

(56) Documents cités:
- EP-A1- 2 487 111
- EP-A1- 2 634 373
- EP-A2- 0 743 247
- EP-A2- 2 466 206
- JP-A- S5 713 234
- US-A- 3 864 056
- US-A1- 2007 116 978

## Description

La présente invention concerne un dispositif de protection thermique pour équipement positionné dans un compartiment moteur d'une turbomachine d'aéronef.

Le compartiment moteur ou compartiment « *core* » d'une turbomachine à double flux est balayé côté intérieur par le flux primaire d'air chaud issu de la chambre de combustion et côté extérieur par le flux secondaire d'air froid issu de la soufflante. L'environnement thermique du compartiment moteur d'une turbomachine d'aéronef est donc très contraignant à cause des parois du carter moteur qui présentent du côté flux primaire des températures très élevées générant un fort rayonnement thermique. Ce rayonnement est compensé par un échange convectif avec le flux d'air ambiant qui est prélevé pour ventiler le compartiment moteur et qui refroidit donc l'équipement (ou les équipements) disposé à l'intérieur de ce compartiment. Cet air ambiant est souvent plus froid que la température d'équilibre de l'équipement mais l'échange convectif peut être insuffisant pour assurer que l'équipement reste en dessous de sa température maximale admissible. Les documents EP2466206, US3864056, et JP57013234 divulguent des dispositifs de protection thermique.

La présente invention a pour objet d'optimiser la protection thermique d'un ou plusieurs équipements positionnés dans un compartiment moteur d'une turbomachine à double flux, par exemple des vannes de prélèvement d'air présentes dans le compartiment « *core* » d'un turboréacteur d'aéronef.

A cet effet, l'invention a pour objet une turbomachine d'aéronef comprenant un compartiment moteur avec au moins une paroi thermiquement radiative exposée à une source chaude, un équipement positionné dans le compartiment moteur et un dispositif de protection thermique pour l'équipement. La turbomachine est caractérisée en ce que le dispositif de protection thermique comprend au moins un écran thermique disposé au moins en partie entre l'équipement et la paroi thermiquement radiative, lequel écran comporte des moyens de canalisation d'air raccordés à une source d'air de refroidissement et configurés pour diriger ledit air de refroidissement vers ledit équipement à l'intérieur du compartiment moteur.

Ainsi, le flux radiatif reçu par l'équipement est plus faible que dans le cas où il n'y a pas de protection radiative ou une protection radiative non ventilée. Si de plus la température de paroi de l'écran est plus basse que celle de l'équipement, le flux radiatif reçu par l'équipement a tendance à le refroidir. De plus, le refroidissement de l'équipement par échange convectif est amélioré par rapport à un écran non ventilé car l'écran agit comme une ventilation dédiée. Le refroidissement est actif dans une zone où, dans le cas de boucliers ou écrans non ventilés, la convection avec l'air ambiant est très faible à cause de la proximité géométrique du bouclier et de l'équipement.

Ledit écran comprend au moins une première partie disposée entre ledit équipement et ladite paroi radiative et une deuxième partie de ventilation complémentaire dudit équipement.

Selon une autre caractéristique possible de l'invention, ladite deuxième partie s'étend sensiblement transversalement par rapport à ladite paroi radiative.

Selon une autre caractéristique possible de l'invention, lesdits moyens de canalisation de ladite deuxième partie sont adaptés pour diriger ledit air de refroidissement sur ledit équipement

Selon une autre caractéristique possible de l'invention, lesdits moyens de canalisation comprennent au moins un passage d'air intérieur audit écran et des orifices pour diriger l'air dudit passage vers ledit équipement.

Selon une autre caractéristique possible de l'invention, lesdits orifices sont distribués de manière adaptée à une ventilation optimale de l'équipement.

Selon une autre caractéristique possible de l'invention, lesdits moyens de canalisation comprennent au moins une plaque déflectrice de l'air de refroidissement vers ledit équipement et au moins un conduit d'amenée dudit air de refroidissement sur ladite plaque.

Selon une autre caractéristique possible de l'invention, ladite plaque déflectrice comporte en outre des organes déflecteurs d'air.

Selon une autre caractéristique possible de l'invention, ledit écran est fixé audit équipement.

Selon une autre caractéristique possible de l'invention, ledit écran est fixé à la nacelle de ladite turbomachine.

Selon une autre caractéristique possible de l'invention, ledit écran est fixé au carter de ladite turbomachine.

Selon une autre caractéristique possible de l'invention, la turbomachine est à double flux et comprend un flux primaire d'air chaud et un flux secondaire d'air froid, et ladite source d'air de refroidissement est constituée par ledit flux secondaire d'air froid.

D'autres caractéristiques et avantages de l'invention ressortiront de la description qui va suivre de modes de réalisation donnés uniquement à titre d'exemple et illustrés par les dessins annexés sur lesquels :
- la figure 1 est une vue schématique en coupe d'un turboréacteur à double flux, qui montre le positionnement du compartiment moteur;
- la figure 2 est une vue schématique en élévation latérale qui illustre une première forme de réalisation d'un dispositif de protection thermique pour un équipement disposé à l'intérieur du compartiment moteur ;
- la figure 3a est une vue schématique en élévation latérale qui illustre une deuxième forme de réalisation d'un dispositif de protection thermique pour un équipement disposé à l'intérieur du compartiment moteur;
- la figure 3b est une vue schématique en élévation frontale de l'écran du dispositif de protection thermique de la figure 3a ;
- la figure 4a est une vue schématique en élévation latérale qui illustre une troisième forme de réalisation d'un dispositif de protection thermique pour un équipement disposé à l'intérieur du compartiment moteur;
- la figure 4b est une vue schématique en élévation frontale de l'écran du dispositif de protection thermique de la figure 4a, et
- la figure 5 est une vue en élévation frontale du turboréacteur de la figure 1 qui illustre différentes zones angulaires.

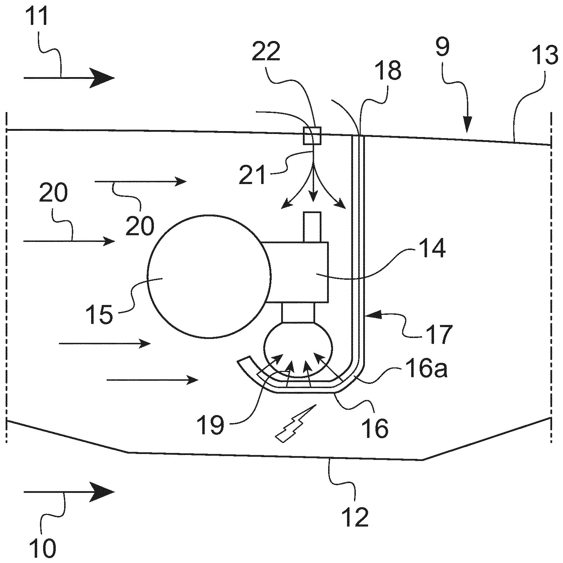

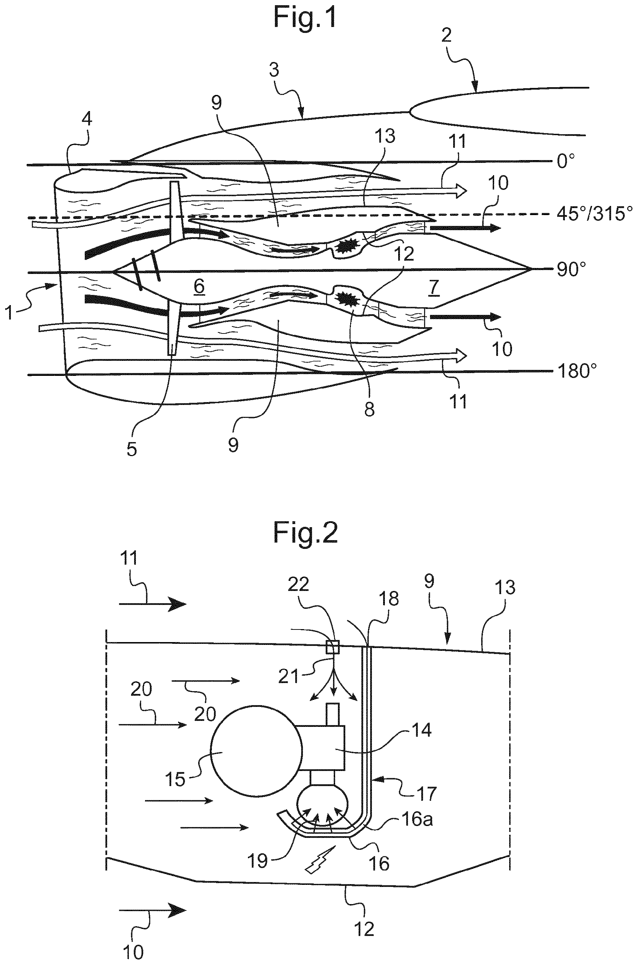

En se reportant à la figure 1, un turboréacteur 1 est fixé à une aile 2 d'un aéronef (non représenté) par un mât 3. Le turboréacteur 1 comporte une nacelle 4 qui en constitue l'enveloppe, une soufflante 5, un compresseur 6, une turbine 7 et une ou plusieurs chambres de combustion 8.

Un compartiment moteur 9 est délimité par un carter dont la paroi intérieure 12 côté flux primaire 10 est située à proximité de la ou les chambres de combustion 8, tandis que la paroi extérieure 13 côté flux secondaire 11 est refroidie par de l'air frais.

A l'intérieur du compartiment moteur 9 est disposé un équipement 14 comme représenté sur les figures 2 à 4. Cet équipement 14 peut être par exemple un ensemble d'une ou plusieurs vannes de prélèvement d'air sur une canalisation 15.

En se reportant à la figure 2, l'équipement 14 est protégé thermiquement de la source chaude que constitue la paroi 12 du compartiment « *core* » 9 par un écran ou bouclier 16. La distance entre l'équipement 14 et l'écran 16 peut être très réduite, par exemple quelques millimètres à quelques centimètres, à cause des faibles dimensions radiales du compartiment moteur 9.

L'écran 16 est creux, c'est-à-dire qu'il comporte une double peau délimitant intérieurement un passage 16a dans lequel peut circuler de l'air de refroidissement. Cet air de refroidissement est amené à l'écran 16 par une (ou plusieurs) canalisation 17 qui débouche dans la veine d'air secondaire 11 à travers un orifice 18 ménagé dans la paroi 13. L'écran 16 comporte dans sa face opposée à la paroi « chaude » 12 des orifices 19 disposés à des endroits stratégiques pour diriger de l'air frais de refroidissement vers l'équipement 14 de façon adéquate. Le nombre, la forme et la dimension de ces orifices 19 sont optimisés en fonction des besoins. Le bouclier ventilé 16 entoure de façon plus ou moins importante l'équipement 14 en fonction des besoins de protection radiative et de ventilation.

D'autres moyens de protection thermique peuvent être combinés au bouclier thermique ventilé comme une ventilation spécifique 21 générée par prélèvement d'air frais de la veine 11 via des moyens appropriés 22.

En fonctionnement, l'écran ou bouclier thermique ventilé 16 améliore la protection radiative par rapport à un bouclier non ventilé car, du fait de cette ventilation avec de l'air frais, la température de paroi du bouclier 16 est plus basse que celle d'un bouclier non ventilé. Le flux radiatif reçu par l'équipement 14 est donc plus faible que dans le cas d'un bouclier non ventilé. Si de plus la température de paroi du bouclier 16 est plus basse que celle de l'équipement 14, le flux radiatif reçu par l'équipement 14 aura tendance à le refroidir.

De plus, le refroidissement de l'équipement 14 par échange convectif est amélioré par rapport à un bouclier non ventilé car le bouclier 16 agit comme une ventilation dédiée. Le refroidissement est actif dans une zone où, dans le cas de boucliers non ventilés, la convection avec l'air ambiant est très faible à cause de la proximité géométrique du bouclier et de l'équipement.

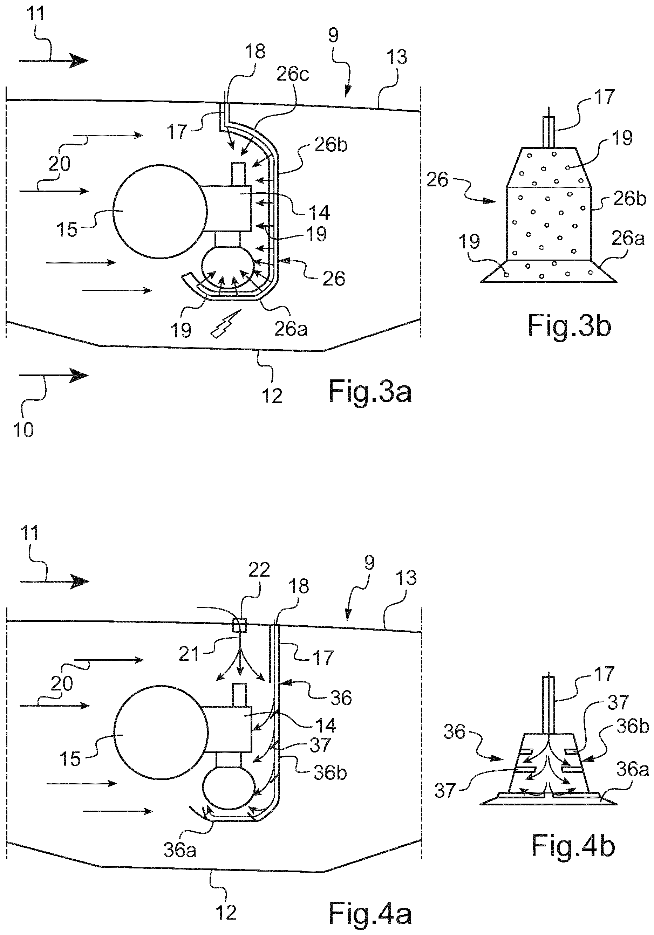

En variante, comme représenté aux figures 3a et 3b, le bouclier 26 peut être constitué d'une première partie 26a interposée entre l'équipement 14 et la paroi « chaude » 12, d'une deuxième partie 26b qui s'étend le long de l'équipement 14, et d'une troisième partie 26c qui vient coiffer plus ou moins l'équipement 14 à l'opposé de la première partie 26a. Cette variante de réalisation permet d'obtenir un bouclier qui entoure au plus près l'équipement 14. Les trois parties 26a, 26b, 26c ont la même structure, c'est à-dire qu'elles sont constituées d'une double peau à l'intérieur de laquelle l'air de refroidissement peut circuler dans un ou plusieurs passages. Les orifices 19 des trois parties 26a, 26b et 26c (figure 3b) sont tournés vers l'équipement 14 et distribués de façon à assurer une ventilation optimale de cet équipement. Ces orifices sont par exemple distribués de manière homogène et identique sur toute la surface des parties 26a, 26b et 26c.

En variante, les orifices 19 peuvent être distribués uniquement en des zones particulières de la surface du bouclier 26 correspondant à des parties spécifiques de l'équipement 14 à ventiler.

En fonctionnement, le bouclier 26 remplit donc une fonction de ventilation dédiée qui vient refroidir la(les) partie(s) les plus sensibles de l'équipement 14, qui sont positionnées à l'opposé de la paroi « chaude » 12, afin de réduire le rayonnement. Le bouclier ventilé 26 combine donc les deux systèmes de protection thermique en jouant le double rôle de protection radiative et de refroidissement de type ventilation dédiée. De plus dans ce cas, il est possible de répartir selon le besoin de l'équipement 14 le refroidissement aux emplacements les plus efficaces.

Une autre variante de réalisation de l'écran ou bouclier de protection thermique est illustrée aux figures 4a et 4b.

Selon cette variante, le bouclier 36 comprend des plaques déflectrices le long desquelles l'air frais de refroidissement prélevé dans le flux secondaire 11 est amené par la ou les canalisations 17 via le ou les orifices 18.

Plus précisément, le bouclier 36 comprend une première plaque déflectrice 36a qui, comme la première partie 26a, est interposée entre l'équipement 14 et la paroi « chaude » 12 du compartiment moteur 9. Cette première plaque 36a est prolongée par une deuxième plaque déflectrice 36b qui s'étend transversalement par rapport à la paroi 12 pour faire écran radiatif vis-à-vis du carter qui est chaud à l'arrière du moteur. La plaque 36a est incurvée et raccordée à la plaque 36b.

La ou les canalisations 17 d'amenée d'air débouchent au voisinage d'un bord de la deuxième plaque 36b qui est opposé à la zone incurvée de la plaque 36a. L'air est amené par la ou les canalisations 17 sur la face des plaques 36a et 36b qui est tournée vers l'équipement 14.

Les plaques ont des dimensions et formes appropriées pour distribuer l'air de refroidissement selon une répartition adaptée à la ventilation efficace de l'équipement 14. Comme représenté sur la figure 4b, les plaques 36a et 36b peuvent avoir en plan une forme trapézoïdale. La deuxième plaque 36b est raccordée à la (les) canalisation(s) 17 du petit côté du trapèze et se trouve dans un même plan que la dite canalisation. De cette manière, l'air s'écoule directement et au plus vite jusqu'au niveau de l'équipement 14. La première plaque 36a est raccordée par son petit côté au grand côté de la deuxième plaque 36b. Les plaques 36a et 36b ne sont pas nécessairement planes et peuvent avoir des formes et/ou des rebords incurvés pour envelopper plus ou moins l'équipement 14.

En dehors de leur forme qui est optimisée pour leur faire remplir pleinement une fonction déflectrice, les plaques 36a et 36b peuvent porter des organes déflecteurs 37 qui sont distribués sur la surface des plaques de manière à favoriser une répartition voulue de l'air de refroidissement vers l'équipement 14. De la même manière que les orifices 19, les organes déflecteurs 37 sont répartis de manière homogène ou par zones suivant les parties de l'équipement 14 que l'on souhaite ventiler.

En fonctionnement, l'air de refroidissement provenant de la (les) canalisations 17 est canalisé et dévié par les plaques 36a et 36b pour assurer une ventilation adéquate de l'équipement 14.

Comme dans le cas du mode de réalisation de la figure 2, l'équipement 14 peut en outre être ventilé de façon spécifique en 21, du côté de la paroi froide 13, grâce à une prise d'air appropriée 22.

L'installation du bouclier ventilé 16, 26, 36 peut se faire de plusieurs façons, en fonction de l'architecture retenue pour la ventilation du compartiment moteur.

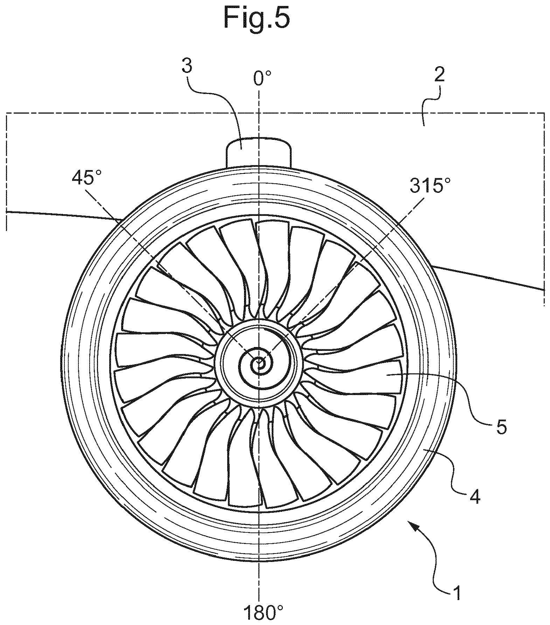

Si la ventilation est assurée par prélèvement d'air du flux secondaire 11 du turboréacteur à l'aide d'orifices dans la paroi 13 séparant le compartiment moteur 9 du flux secondaire 11 et faisant partie de la nacelle 4 et :
- Si l'équipement est situé dans une zone 315° - 45° (0° étant situé en haut du compartiment moteur 9, sous le mât réacteur 3, comme représenté sur la figure 5), alors le bouclier ventilé 16, 26, 36 peut être fixé à l'équipement 14 et relié par un tuyau flexible à un orifice situé dans la paroi 13. Ce flexible permet de ne pas perturber l'ouverture de la nacelle 4 ;
- Si l'équipement est situé dans une zone 45° - 315° (voir figures 1 et 5), alors le bouclier ventilé 16, 26, 36 doit être relié à la paroi 13 de la nacelle 4 et la forme du bouclier ne doit pas empêcher l'ouverture de la nacelle. Ceci peut présenter l'inconvénient de contraindre la forme du bouclier et de réduire son efficacité.

Plus généralement, l'écran 14 est fixé à tout composant du compartiment de la turbomachine susceptible de le supporter.

Si la ventilation de toute la zone est assurée par un prélèvement commun d'air du flux secondaire 11 du turboréacteur, généralement constitué d'un tuyau principal muni d'une vanne de régulation de débit et sur lequel viennent se connecter les différents tuyaux de ventilation, alors le bouclier ventilé 16, 26, 36 peut également être raccordé à ce prélèvement.

Bien qu'au moins un mode de réalisation de l'invention ait été illustré et décrit, il convient de noter que d'autres modifications, substitutions et alternatives apparaissent à l'homme de l'art et peuvent être changées sans sortir de la portée de l'objet décrit ici. La présente demande envisage de couvrir toutes les adaptations et variations des modes de réalisation décrits ci-dessus. De plus, le terme « comprenant » n'exclut pas d'autres éléments ou étapes et le terme « un » n'exclut pas le pluriel. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus. On notera qu'il faut inclure dans la portée du brevet toutes les modifications envisagées ci-dessus dans la mesure où elles font partie de la contribution des inventeurs à l'art antérieur. De telles modifications, substitutions et alternatives peuvent être réalisées si elles sont incluses dans la portée des revendications.

## Revendications

1. Turbomachine d'aéronef comprenant un compartiment moteur (9) avec au moins une paroi thermiquement radiative (12) exposée à une source chaude, un équipement (14) positionné dans le compartiment moteur (9), et un dispositif de protection thermique, le dispositif de protection thermique comprenant au moins un écran thermique (16 ; 26 ; 36) disposé au moins en partie entre l'équipement et la paroi thermiquement radiative (12), **caractérisé en ce que** l'écran (16 ; 26 ; 36) comporte des moyens de canalisation d'air (16a, 19 ; 26a, 26b ; 36a ; 36b) raccordés à une source d'air de refroidissement (11) et configurés pour diriger ledit air de refroidissement vers l'équipement (14) à l'intérieur du compartiment moteur, et **en ce que** ledit écran (26 ; 36) comprend au moins une première partie (26a ; 36a) disposée entre ledit équipement (14) et ladite paroi radiative (12) et une deuxième partie (26b; 36b) de ventilation complémentaire dudit équipement (14).

2. Turbomachine selon la revendication 1, **caractérisée en ce que** ladite deuxième partie (26b ; 36b) s'étend sensiblement transversalement par rapport à ladite paroi radiative (12).

3. Turbomachine selon la revendication 2, **caractérisée en ce que** lesdits moyens de canalisation (19, 26b ; 36b) de ladite deuxième partie (26b ; 36b) sont configurés pour diriger ledit air de refroidissement sur ledit équipement (14).

4. Turbomachine selon l'une quelconque des revendications 1 à 3, **caractérisée en ce que** lesdits moyens de canalisation comprennent au moins un passage d'air (16a) intérieur audit écran et des orifices (19) pour diriger l'air dudit passage vers ledit équipement (14).

5. Turbomachine selon la revendication 4, **caractérisée en ce que** lesdits orifices (19) sont distribués de manière adaptée à une ventilation optimale de l'équipement (14).

6. Turbomachine selon l'une quelconque des revendications 1 à 3, **caractérisée en ce que** lesdits moyens de canalisation comprennent au moins une plaque (36a, 36b) déflectrice de l'air de refroidissement vers ledit équipement (14) et au moins un conduit (17) d'amenée dudit air de refroidissement sur ladite plaque (36b).

7. Turbomachine selon la revendication 6, **caractérisée en ce que** ladite plaque déflectrice (36a, 36b) comporte en outre des organes déflecteurs d'air (37).

8. Turbomachine selon l'une quelconque des revendications 1 à 7, **caractérisée en ce que** ledit écran (16 ; 26 ; 36) est fixé audit équipement.

9. Turbomachine selon l'une quelconque des revendications 1 à 7, **caractérisée en ce que** ledit écran (16 ; 26 ; 36) est fixé à la nacelle (4) de ladite turbomachine.

10. Turbomachine selon l'une quelconque des revendications 1 à 7, **caractérisée en ce que** ledit écran (16 ; 26 ; 36) est fixé au carter (12, 13) de ladite turbomachine.

11. Turbomachine selon l'une quelconque des revendications 1 à 10, **caractérisée en ce que** ladite turbomachine est à double flux et comprend un flux primaire d'air chaud et un flux secondaire d'air froid et **en ce que** ladite source d'air de refroidissement est constituée par ledit flux secondaire d'air froid.

## Patentansprüche

1. Luftfahrzeug-Turbotriebwerk, welches einen Motorraum (9) mit wenigstens einer thermisch strahlenden Wand (12), die einer Wärmequelle ausgesetzt ist, eine im Motorraum (9) positionierte Einrichtung (14) und eine Wärmeschutzvorrichtung umfasst, wobei die Wärmeschutzvorrichtung wenigstens einen Hitzeschild (16; 26; 36) umfasst, der wenigstens teilweise zwischen der Einrichtung und der thermisch strahlenden Wand (12) angeordnet ist, **dadurch gekennzeichnet, dass** der Schild (16; 26; 36) Luftleitmittel (16a, 19; 26a, 26b; 36a; 36b) aufweist, die an eine Kühlluftquelle (11) angeschlossen sind und dafür ausgelegt sind, die Kühlluft zu der Einrichtung (14) im Inneren des Motorraumes zu lenken, und dadurch, dass der Schild (26; 36) wenigstens einen ersten Teil (26a; 36a), der zwischen der Einrichtung (14) und der strahlenden Wand (12) angeordnet ist, und einen zweiten Teil (26b; 36b) zur zusätzlichen Belüftung der Einrichtung (14) umfasst.

2. Turbotriebwerk nach Anspruch 1, **dadurch gekennzeichnet, dass** sich der zweite Teil (26b; 36b) im Wesentlichen quer bezüglich der strahlenden Wand (12) erstreckt.

3. Turbotriebwerk nach Anspruch 2, **dadurch gekennzeichnet, dass** die Leitmittel (19, 26b; 36b) des zweiten Teils (26b; 36b) dafür ausgelegt sind, die Kühlluft auf die Einrichtung (14) zu lenken.

4. Turbotriebwerk nach einem der Ansprüche 1 bis 3, **dadurch gekennzeichnet, dass** die Lenkmittel wenigstens einen Luftdurchlass (16a) innerhalb des Schildes und Öffnungen (19) zum Lenken der Luft des Durchlasses zu der Einrichtung (14) hin umfassen.

5. Turbotriebwerk nach Anspruch 4, **dadurch gekennzeichnet, dass** die Öffnungen (19) auf eine an eine optimale Belüftung der Einrichtung (14) angepasste Weise verteilt sind.

6. Turbotriebwerk nach einem der Ansprüche 1 bis 3, **dadurch gekennzeichnet, dass** die Lenkmittel wenigstens eine Platte (36a, 36b) zur Ablenkung der Kühlluft zu der Einrichtung (14) hin und wenigstens eine Leitung (17) zur Zuführung der Kühlluft zu der Platte (36b) umfassen.

7. Turbotriebwerk nach Anspruch 6, **dadurch gekennzeichnet, dass** die Ablenkplatte (36a, 36b) außerdem Luftablenkelemente (37) umfasst.

8. Turbotriebwerk nach einem der Ansprüche 1 bis 7, **dadurch gekennzeichnet, dass** der Schild (16; 26; 36) an der Einrichtung befestigt ist.

9. Turbotriebwerk nach einem der Ansprüche 1 bis 7, **dadurch gekennzeichnet, dass** der Schild (16; 26; 36) an der Gondel (4) des Turbotriebwerks befestigt ist.

10. Turbotriebwerk nach einem der Ansprüche 1 bis 7, **dadurch gekennzeichnet, dass** der Schild (16; 26; 36) am Gehäuse (12, 13) des Turbotriebwerks befestigt ist.

11. Turbotriebwerk nach einem der Ansprüche 1 bis 10, **dadurch gekennzeichnet, dass** das Turbotriebwerk ein Zweikreistriebwerk ist und einen Primärstrom von Heißluft und einen Sekundärstrom von Kaltluft umfasst, und dadurch, dass die Kühlluftquelle aus dem Sekundärstrom von Kaltluft besteht.

## Claims

1. Aircraft turbomachine comprising an engine compartment (9) with at least one thermally radiative wall (12) exposed to a heating source, equipment (14) positioned in the engine compartment (9), and a thermal protection device, the thermal protection device comprising at least one heat shield (16; 26; 36) arranged at least partially between the equipment and the thermally radiative wall (12), **characterized in that** the shield (16; 26; 36) comprises air-channeling means (16a, 19; 26a, 26b; 36a; 36b) connected to a cooling air source (11) and configured to direct said cooling air toward the equipment (14) within the engine compartment, and **in that** the shield (26; 36) comprises at least one first part (26a; 36a) arranged between the equipment (14) and said radiative wall (12) and a second complementary part (26b; 36b) for ventilation of said equipment (14).

2. Turbomachine according to claim 1, **characterized in that** said second part (26b; 36b) extends substantially transversely with respect to said radiative wall (12).

3. Turbomachine according to claim 2, **characterized in that** said channeling means (19, 26b; 36b) of said second part (26b; 36b) are configured to direct said cooling air over said equipment (14).

4. Turbomachine according to any one of claims 1 to 3, **characterized in that** said channeling means comprise at least one air passage (16a) inside said shield and orifices (19) in order to direct the air from said passage toward said equipment (14).

5. Turbomachine according to claim 4, **characterized in that** said orifices (19) are distributed in a manner adapted to optimal ventilation of the equipment (14).

6. Turbomachine according to any one of claims 1 to 3, **characterized in that** said channeling means comprise at least one plate (36a, 36b) for deflecting the cooling air toward said equipment (14) and at least one conduit (17) for guiding said cooling air over said plate (36b).

7. Turbomachine according to Claim 6, **characterized in that** said deflector plate (36a, 36b) also comprises air-deflecting elements (37).

8. Turbomachine according to any one of claims 1 to 7, **characterized in that** said shield (16; 26; 36) is fixed to said equipment.

9. Turbomachine according to any one of claims 1 to 7, **characterized in that** said shield (16; 26; 36) is fixed to the nacelle (4) of said turbomachine.

10. Turbomachine according to any one of claims 1 to 7, **characterized in that** said shield (16; 26; 36) is fixed to the housing (12, 13) of said turbomachine.

11. Turbomachine according to any one of claims 1 to 10, **characterized in that** said turbomachine is a bypass turbomachine and comprises a primary flow of hot air and a secondary flow of cold air, and **in that** said cooling air source is formed by said secondary flow of cold air.
